# EUROPEAN PATENT APPLICATION

(11) **EP 2 401 918 A2**
(43) Date of publication of application: **04.01.2012**
(21) Application number: 11005142.2
(22) Date of filing: 24.06.2011
(51) Int. Cl.: A21B 1/52

(54) **Mobile oven**

(30) Priority: 02.07.2010 HU 1000353
(71) Applicant: Tárnok, Ferenc, 4032 Debrecen (HU)
(72) Inventor: Tárnok, Ferenc, 4032 Debrecen (HU)
(74) Representative: Emri, Jozsefné

(57) **Abstract**

The invention relates to a mobile oven for preparing food, the oven body (1) of which comprises a base (2) and a housing (3) connected to the base in an unreleasable manner. The housing (3) is equipped with at least one chimney (4) and a door (12). The base (2) of the oven body (1) has a layered structure made of heat insulating materials, the housing (3) has a double-wall construction, and the space between the double walls is filled with a heat-retaining material (21). The mobile oven according to the invention is wood-fired, when placed on a rolling stand (13) it can be moved easily to another place, and is used preferably for outdoor baking, cooking.

## Description

The invention relates to a mobile oven for preparing food, the oven body of which comprises a base and a housing connected to the base in an unreleasable manner, and the housing is equipped with at least one chimney and a door. The base of the oven body has a layered structure made of heat insulating materials, the housing has a double-wall construction, and the space between the double walls is filled with a heat-retaining material. The mobile oven according to the invention is wood-fired, when placed on a rolling stand it can be moved easily to another place, and is used preferably for outdoor baking, cooking.

Nowadays there is an increasing demand for one type of oven, the non-built-in, mobile oven that can be used outdoors. Ovens have become an important accessory of festivals, garden parties and other larger-scale events, as the food prepared in them retains its taste, flavour, and they reproduce the traditional Hungarian tastes.

The known wood-fired mobile ovens include the Haussler oven, which is made from a handmade oven casting, and has a flue pipe stub equipped with a valve. The oven is an apparatus on legs with special heat-resistant insulation, lined with chamotte stones. The oven from Békés county and other mobile ovens are characterized by a hemispherical or rectangular shape, the oven body is usually made of clay, it is equipped with a door and a chimney, and has an undivided (the same chamber holds both the fuel and the food) or a divided chamber (black or white oven).

Patent No. EP20040007096 relates to an electric clay oven comprising an outer housing having a cavity made of clay or ceramic. It comprises an insulator made of rock or glass wool placed between the housing and the cavity.

Utility model reg. no. 2388 relates to a portable clay oven comprising an oven wall made of a mixture of clay earth and natural additives, preferably straw chaff, and having a door opening and a flue gas opening. The utility model is characterized by having a metal base and a metal frame fixed to it. A baking plate is fixed to the frame in parallel with the base. The clay oven wall is plastered on the metal frame.

The disadvantages of the above ovens are that they cannot be operated continuously (for days), heating them up is time and energy consuming, and they are difficult to move to another place as they are easily damaged.

The objective of the invention is to provide a mobile oven which retains the flavour of the food prepared in it, can be heated up to a high temperature within a short time, then can retain the heat for a long time with minimal heat loss to the environment, can be operated continuously for days; has a safe design, a low operating cost, but a high efficiency, and can be moved easily to another place.

The idea of the invention comes from the recognition that if the oven body is designed in such a way and contains such materials that on the one hand it can take up heat from the chamber of the oven easily, and on the other hand it radiates the heat back to the same chamber from where it has been taken and thus heat loss to the external environment is minimal, then the above objective can be achieved.

The set objective is solved by providing a mobile oven, the oven body of which comprises a multi-layer base made of heat insulating materials and a housing having a double-wall construction, and the space between the double walls of the housing is filled with a heat-retaining material.

Thus the solution according to the invention is a mobile oven for preparing food, the oven body of which comprises a base and a housing connected to the base in an unreleasable manner; the housing is equipped with at least one chimney and a door, wherein the base of the oven body has a layered structure made of heat insulating materials, the housing of the oven body has a double-wall construction, and the space between the double walls is filled with a heat-retaining material.

According to a preferred embodiment the base is made of several heat insulating materials placed on one another, it is rectangular and horizontal. The housing has an arched side wall, and a front and a rear wall perpendicular to the base.

The heat-retaining material filling the space between the double walls of the housing of the oven body is preferably basalt grit.

According to a preferred embodiment the oven body is equipped with an open chimney. The open chimney is located on the door side of the oven body in such a way that its lower part conforms to the shape of the housing and covers a part of the oven body beside the door and above the door in an umbrella-like manner.

A preferred embodiment of the mobile oven according to the invention is described in more detail below with reference to the drawings, where
Figure 1 shows a schematic drawing of the mobile oven according to the invention;
Figure 2 shows a longitudinal cross-section of the oven body.

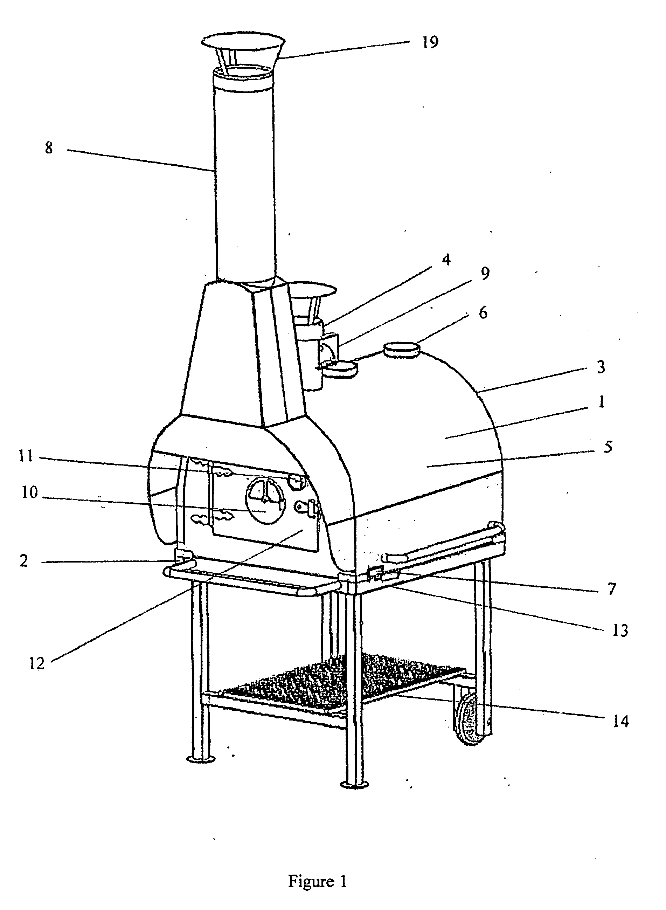

Figure 1 shows the oven body 1 and the stand 13 holding the oven body 1. The two main parts of the oven body 1 are the base 2 and the housing 3.

In the illustrated embodiment the base 2 is rectangular and horizontal. The housing 3 is connected to the base 2 and has a double-wall construction. The housing 3 has an arched side wall 5 and a front and a rear wall perpendicular to the base 2.

The front wall of the housing 3 is equipped with a door 12 opening into the undivided chamber 1 of the oven body 1.

The door 12 is equipped with an inspection-vent window 10 and a thermometer 11. On the upper part of the oven body 1 close to the door 12 there is a chimney 4, the upper part of which is equipped with a chimney cap 19 with a spark arrestor. The chimney 4 is equipped with a regulator 9, preferably a butterfly valve.

On the upper part of the oven body 1 there is an inlet opening 6 equipped with a closing cap. Preferably the oven body 1 has three inlet openings 6: one in front of the chimney 4 and two behind the chimney 4 (in Figure 1 the inlet opening 6 in front of the chimney 4 is hidden). On the lower part of the side wall 5 there is an outlet opening 7. Preferably there are three outlet openings 7, two on the lower part of the side wall 5 close to the front wall, and the third on the lower part of the rear wall of the oven body 1. The outlet openings 7 are closed by an L-shaped sliding plate.

According to a preferred embodiment an open chimney 8 is connected in a releasable manner to the front part of the oven body 1, the part including the door 12, the upper part of which is equipped with a chimney cap 19 with a spark arrestor. The lower part of the open chimney 8 follows the curve of the wall of the housing 3 and extends to cover a part of the oven body 1 beside the door 12 on both sides and above the door in an umbrella-like manner, as it is shown in Figure 1.

The lower part of the oven body 1 is equipped with handles.

The oven body 1 can be placed on a stand 13. The stand 13 has a rack 14.

The legs of the stand 13 are preferably equipped with wheels.

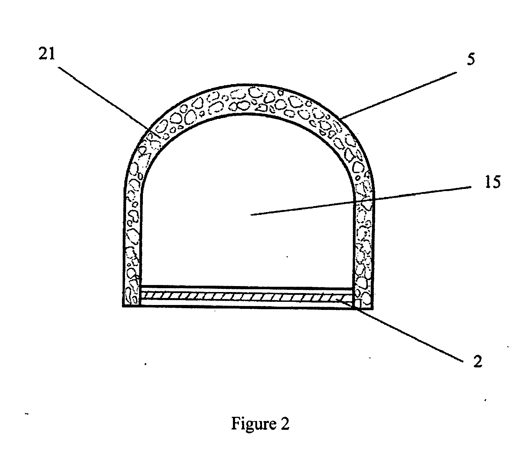

Figure 2 shows the arched double side wall 5 filled with a heat-retaining material 21. In the solution according to the invention the distance between the walls of the double side wall is not the constant, but gradually increases towards the top of the arch. The extent of the increase is about 30%.

The space between the double front and rear walls of the housing 3 is also filled with a heat-retaining material 21.

A preferably used heat-retaining material 21 is basalt grit.

The multi-layer base 2 of the oven body 1 is preferably constructed in such a way that there is a base plate with reinforcing ribs at the bottom, made of the same material as the housing 3, to which the housing 3 is connected in an unreleasable manner.

There is a layer of insulating material on the base plate, preferably ceramic fibre paper or glass wool.

The next layer is vermiculite. There is a layer of chamotte bricks on the vermiculite, bound with clay mortar, and that is covered with a mixture of chamotte powder and water-glass.

The housing 3 of the mobile oven according to the invention is filled with a heat-retaining material 21, preferably basalt grit in such a way that basalt grit is poured in through the inlet openings 6 until the space between the double walls of the housing 3 is completely, perfectly filled, then the inlet openings 6 are closed with the closing caps. If necessary, the heat-retaining material 21 can be discharged through the outlet openings 7 by removing the L-shaped plates.

The part of the open chimney 8 beside and above the door 12 controls the route of the heat and flue gas coming from the chamber when the door 12 is open, and directs them through the flue pipe of the open chimney 8 into the open air.

A chimney cap 19 with a spark arrestor on the top of both the chimney 4 and the open chimney 8 provides additional safety during the operation of the mobile oven according to the invention by ensuring on the one hand that the flue gas is discharged at the proper place and height, and on the other hand that the emission of any spark from the chamber 15 is prevented by the spark arrestor.

According to a preferred embodiment the chimney 4 can be connected into the open chimney 8 in a releasable manner by means of a flanged elbow pipe, allowing the oven to be built-in.

The oven body 1 is made of a metal plate, preferably a steel plate, and coated with a heat-resistant paint. The base of the oven body 1 is 50-130 cm wide, 60-160 cm long, the arch is 50-120 cm high. The distance between the double walls is 8-14 cm.

Before operation the mobile oven according to the invention is placed in a properly selected location. Fuel suitable' for heating up the oven body 1, preferably wood or wood briquette is placed in the chamber 15 and lit. During heating-up the door 12 is open. The generated flue gas and steam flows into the open air through the chimney 4 and the open chimney 8. After heating up the oven body 1 to the appropriate temperature the burnt fuel, ember is pushed to the side or back in the oven body 1. Then the door 12 is closed. Now the temperature in the chamber is about 350°C. This temperature is reached in about 60 minutes, depending on the quality of the fuel.

The next step is to set the appropriate temperature for baking the food to be prepared. This is achieved by the proper adjustment of the regulator 9 on the chimney 4 and the inspection-vent window 10. After setting the required temperature, which can be checked with the thermometer 11 on the door 12, the baking pan or clay pot containing the food to be prepared is placed into the chamber 15.

During baking the inspection-vent window 10 is used to check the food being prepared. As after heating-up it takes about 3 hours for the oven body 1 to cool down gradually (from 350°C) to about 100°C, it is possible to prepare several different foods requiring lower and lower temperatures one after the other (e.g. meat, bread, cake) with a single heating-up of the oven.

The layered structure of the base 2 and the double-wall construction of the housing 3 of the oven according to the invention, as well as the heat-retaining material inside the wall ensures on the one hand that the oven body 1 heats up in a short time and retains the required temperature for a long time, and on the other hand that temperature of the outer wall of the oven body 1 in contact with the external environment does not exceed 40°C. It is also the structure of the base 2 and the housing 3 that allows the continuous operation of the oven body 1 for a longer time, even for days with minimal additional fuel.

Another advantage of the mobile oven according to the invention is that fuel can be stored on the rack of the stand holding the oven body, ensuring easy and comfortable availability.

A stew pot hanger, a gridiron or a disc cooker can be added to the mobile oven, thereby widening the possibilities for the lovers of gastronomy.

An additional advantage of the mobile oven is that although it is used primarily outdoors, when placed on a rolling stand it can be moved easily to another place, if the safe discharge of flue gas is ensured, it can be built in and operated in a closed space. The temperature of the outer wall of the housing is low, therefore the outside of the oven body can be covered as desired.

The mobile oven according to the invention can be used to prepare practically any type of food, its use is not limited to certain types of food, and the energy used to operate it can be used to maximum effect.

## Claims

1. A mobile oven for preparing food, the oven body (1) of which comprises a base (2) and a housing (3) connected to the base (2) in an unreleasable manner; the housing (3) is equipped with at least one chimney (4) and a door (12), wherein the base (2) of the oven body (1) has a layered structure, the housing (3) has a double-wall construction, and the space between the double walls of the housing (3) is filled with a heat-retaining material (21).

2. The mobile oven according to claim 1, wherein the heat-retaining material (21) is basalt grit.

3. The mobile oven according to claim 1, wherein the housing (3) has an arched side wall (5), and the distance between walls of the double side wall gradually increases towards the top of the arch.

4. The mobile oven according to claim 1, wherein the layers placed on one another on the base plate of the base (2) are: insulating material, vermiculite, brick, clay mortar, and a mixture of chamotte powder and water-glass.

5. The mobile oven according to claims 1 and 4, wherein the base (2) of the oven body (1) is rectangular.

6. The mobile oven according to claims 1-5, wherein there is at least one inlet opening (6) and at least one outlet opening (7) on the oven body (1).

7. The mobile oven according to claims 1-6, wherein an open chimney (8) is connected to the oven body (1) in such a way that its lower part covers a part of the oven body (1) beside and above the door (12) in an umbrella-like manner.

8. The mobile oven according to claims 1 and 7, wherein both the chimney (4) and the open chimney (8) are equipped with a chimney cap (19) with a spark arrestor.

9. The mobile oven according to claims 1 and 8, wherein the chimney (4) is equipped with a regulator (9).

10. The mobile oven according to claim 1, wherein the door (12) of the housing (3) is equipped with an inspection-vent window (10) and a thermometer (11).

11. The mobile oven according to claims 1-10, wherein the material of the housing (3) is a heat resistant metal.

12. The mobile oven according to claims 1-11, wherein the oven body (1) is placed on a stand (13).
